# EUROPEAN PATENT APPLICATION

(11) **EP 2 941 956 A1**
(43) Date of publication of application: **11.11.2015**
(21) Application number: 15166856.3
(22) Date of filing: 07.05.2015
(51) Int. Cl.: A01M 1/14, A01M 1/04

(54) **INSECT TRAP**

(30) Priority: 07.05.2014 GB 201408086
(71) Applicant: Russell IPM Ltd, Deeside, Flintshire CH5 2LA (GB)
(72) Inventor: Al-Zaidi, Shakir, DEESIDE CH5 3RQ (GB)
(74) Representative: Hamilton, Alistair

(57) **Abstract**

Insect traps are disclosed that comprise a substrate (10, 20) upon which is carried an active coating (14, 24) destructive to insects. The substrate (10, 20) has markings that form a visually-distinctive, contrasting visual pattern (16, 26) in the region of the active coating (14, 24). The traps have particular, but not exclusive, application to trapping greenhouse pests, such as whitefly and thrips. A range of alternative marking patterns (16, 26) and colour combinations are disclosed. The destructive coating may include an adhesive and a chemical insecticide. Additionally, the coating may include one or more semiochemical, such as a pheromone or an allomone.

## Description

This invention relates to insect traps. It has particular, but not exclusive, application to sticky insect traps for use in indoor growing spaces such as greenhouses, but might also have applications in protecting plants growing outdoors.

Greenhouse pests such as whitefly, aphids, thrips and leaf miners present a serious challenge to growers, causing substantial damage to or reduction in quality of crops, and a consequent reduction in the grower's income. Some pests can be more devastating if they are a vector of a crop disease, such as tomato yellow leaf curl viruses. Further challenges to growers have been presented by consumers of their produce, who are demanding produce that has ever less pesticide residue. Repeated pesticide application is not a viable solution to this problem.

For many years, growers have been familiar with the fact that these insects are sensitive to colours. Sticky traps of various colours (predominantly yellow and blue) have been used for monitoring the presence of and the determination of population level of these insects. However, their usage as a mean of managing the pest population has been restricted by the limited efficiency of these traps.

Various efforts have been made to maximise the attraction of these traps. Yellow sticky traps reflecting a wavelength within the range of 520-620nm appear to offer the best level of attraction.

JP-A-2000004754 discloses an adhesive trap that has a heightened contrast in appearance to improve its attractiveness to flying agricultural pests, by forming a coloured frame at the perimeter of an adhesive film. The frame may be black in colour at the perimeter of an adhesive film that is coloured e.g., yellow.

WO-A-2009/084900 discloses a sticky trap capable of exhibiting maximal visual attraction effects by suitably controlling factors such as colour contrast, an area ratio of the trap portion to the background portion, and variation in shape.

An aim of this invention is to provide a trap that can manage greenhouse pests more effectively and efficiently than known traps, without relying upon use of pesticides.

To this end, the present invention provides an insect trap comprising a substrate upon which is carried an active coating destructive to insects, in which the substrate has markings that form a visually-distinctive, contrasting visual pattern in the region of the active coating.

It has been found that the provision of a pattern in the active region of the trap can significantly increase its effectiveness.

The active coating may be transparent or semi-transparent, and at least partially cover the visual pattern, such that the pattern is visible through the active coating.

Within the pattern, the markings preferably occupy between 10% and 50% of the area covered by the pattern. In many cases, this will achieve optimum effectiveness, although embodiments falling outside the range may still bring in some improvements when compared with an unpatterned trap.

In embodiments of the invention, the active coating is typically an adhesive coating, and may be a pressure-sensitive adhesive. Alternatively or additionally the active coating may include a chemical pesticide. Alternatively or additionally the active coating may be capable of entomopathogenic dissemination. Embodiments of the invention may include one or more semiochemical, such as a pheromone or an allomone. Application of a controlled released pheromone or allomone can enhance the effectiveness of traps embodying the invention acting synergistically with the pattern.

Embodiments of the invention may be of various shapes and forms. For example, the substrate may be a rigid board. Such boards may be formed from plastic material, material derived from paper, cardboard or other material. The board may be flat, or may be alternatively shaped, for example as a cylinder or a sphere. Alternatively, the substrate may be a flexible film, such examples can, for use, be hung along rows of growing plants.

Embodiments of the invention will now be described in detail, by way of example, and with reference to the accompanying drawings, in which:
Figure 1 shows a first embodiment of the invention having a substrate of rigid card;
Figure 2 shows a second embodiment of the invention having a substrate of an elongate, flexible plastic film; and
Figures 3 to 15 are examples of pattern elements that may be used in embodiments of the invention.

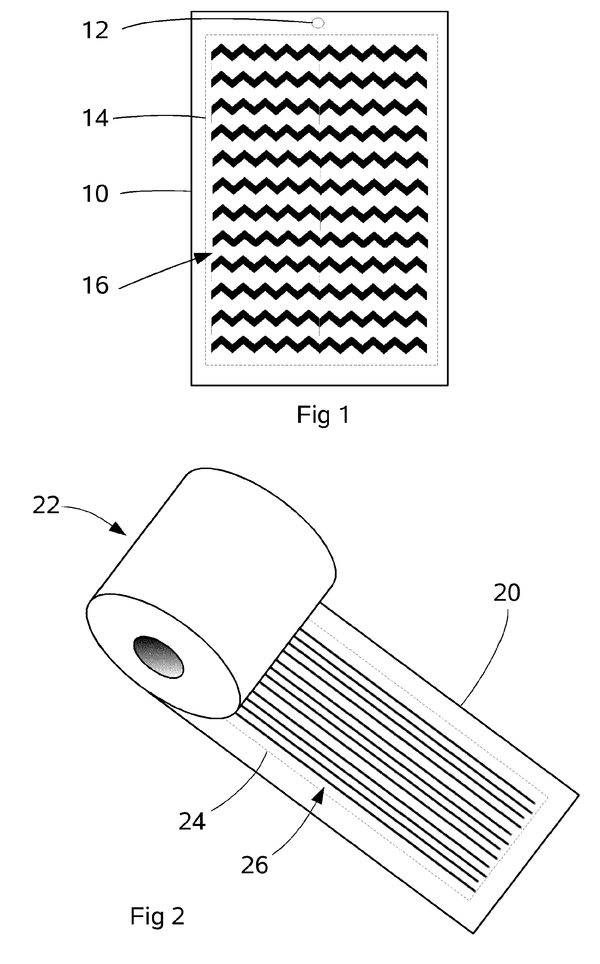

With reference to Figure 1, an insect trap being a first embodiment of the invention includes a substrate 10 that is formed from a rectangle of plastic material. A typically-sized trap will be approximately 10 cm x 20 cm in size. A hole 12 is formed through the substrate from which the trap can be suspended. In this embodiment, the substrate has a degree of rigidity, such that it substantially maintains is shape when suspended from the hole 12. The trap is deployed (typically along with multiple other similar traps) by hanging it in the vicinity of growing plants that are to be protected against attack.

At least a front surface of the substrate 10 (or a coating applied to the substrate) is coloured in appearance. In the case of substrates that are yellow in colour, the substrate typically has highest reflectivity in a range of wavelengths extending from 520 nm to 620 nm. However for substrates that are intended to trap thrips, its highest attractiveness were recorded when the highest reflectivity in a range 400 nm to 500 nm.

An active coating 14 is applied to one or each coloured surface of the substrate 10. The active coating 14 may cover the entire surface or a greater part of it. The active coating 14 functions to kill or incapacitate an insect that lands on it. To achieve this, it includes a tacky adhesive and, optionally, an insecticide composition.

A visual pattern 16 is applied to the or each coloured surface of the substrate 10 by printing ink or dye markings onto the substrate 10. The pattern 16 is visible through, and is substantially covered by, the active coating 14. The pattern 16 is formed from regions that are, in appearance, visually contrasting to the coloured surface of the substrate 10 to which it is applied. The form and nature of the pattern 16 will be described below.

With reference to Figure 2, an insect trap being a second embodiment of the invention includes a substrate 20 that is formed from a length of flexible plastic material that may conveniently be formed into a roll 22 for storage and distribution. Typically, such an embodiment will have a width in the range 5 cm to 60 cm, and typically of 30 cm and a typical length of 100 m. The trap is deployed by unrolling it and hanging it from supports adjacent to growing plants that are to be protected against insect attack. The substrate 20 can be cut to length as required.

At least one surface of the substrate 20 (or a coating applied to the substrate) is coloured in appearance. The substrate has highest reflectivity in a range of wavelengths extending from 400 nm to 500 nm or 520 nm to 620 nm depending on the targeted insect.

An active coating 24 is applied to one or each coloured surface of the substrate 20. The active coating 24 may cover the entire surface or a greater part of it. The active coating 24 functions to kill or incapacitate an insect that lands on it. To achieve this, it includes a tacky adhesive and, optionally, an insecticide composition.

A visual pattern 26 is applied to the or each coloured surface of the substrate 20 by printing ink or dye markings onto the substrate 20. The pattern 26 is visible through, and is substantially covered by, the active coating 24. The pattern 26 is formed from regions that are, in appearance, visually contrasting to the coloured surface of the substrate 20 to which it is applied. The form and nature of the pattern 26 will be described below.

In either embodiment, the pattern 16, 26 can take many alternative forms, that may be optimised to attract specific pest insects be straightforward experimentation. Examples of suitable patterns will be described.

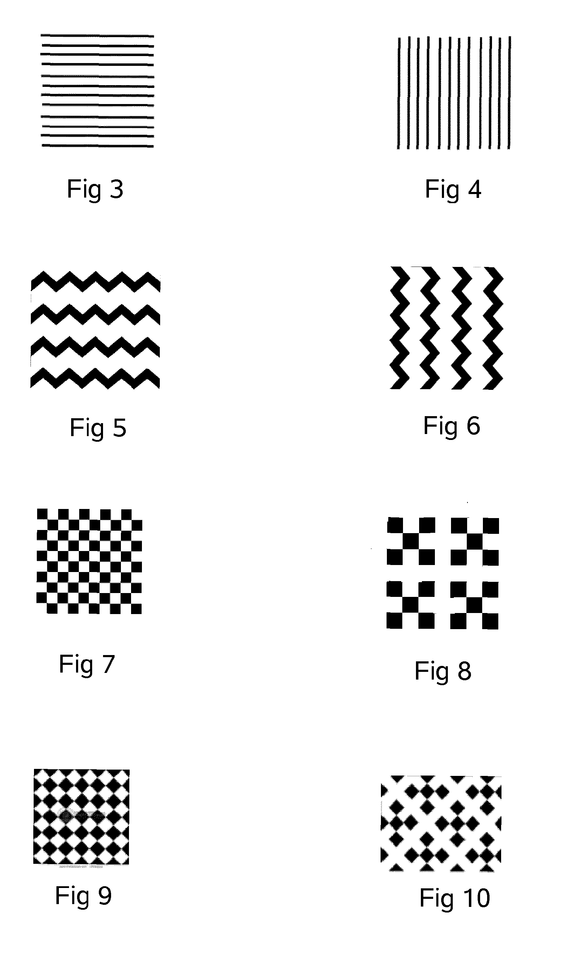

A pattern comprising repetitive printing of straight parallel lines using a colour contrasting with the coloured surface proved to be increase catch rate significantly when compared with an unpatterned trap (Figures 3 and 4). The colour of the lines can be lighter or darker than the colour of the coloured surface. The width of lines is preferably less than the width of the unprinted surface of the trap and preferably occupy not less than 10% and not more than 50% of the area of the coloured surface.

The lines may extend parallel to or transverse to a long axis of the surface. Alternatively, there may be regions of each of a parallel or transverse orientation.

The printed lines could be straight lines or zigzag or combination of the two. As an alternative to, or in addition to, straight lines, as described above, the pattern may include zigzag lines (Figures 5 and 6). The pattern may have exclusively zigzag lines, or may have regions of straight and regions of zigzag lines, or the different forms of lines may be interspersed. The zigzag lines may extend parallel to or transverse to a long axis of the surface. Alternatively, there may be regions of each of a parallel or transverse orientation.

The pattern may include a chequered region. This may be a simple, square or rectangular cheque pattern, as shown in Figure 7. A modified cheque pattern that omits some rows or columns thereby reducing the ratio of printed to unprinted area, as shown in Figure 8, may be as effective.

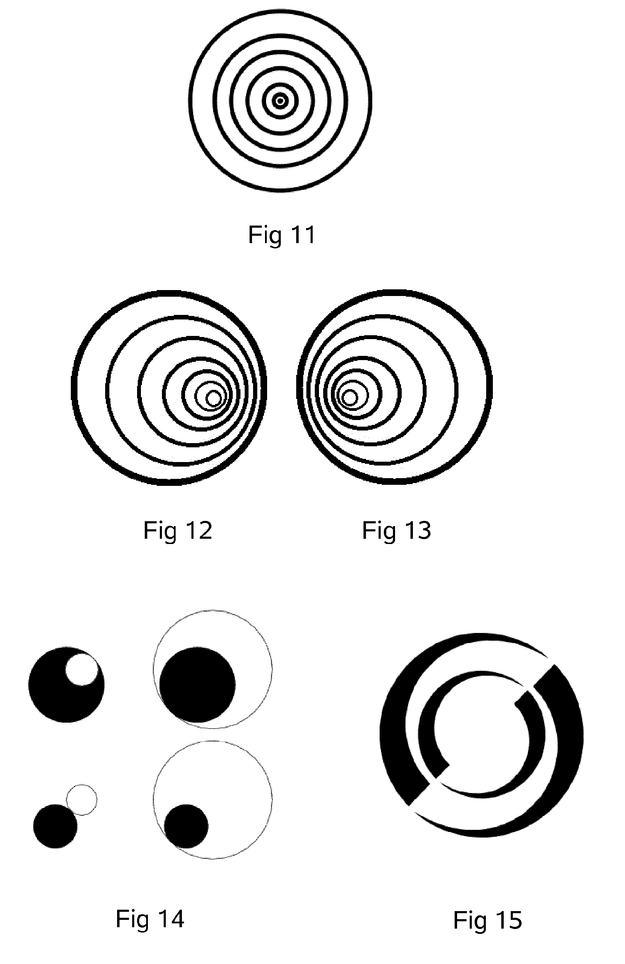

The pattern may include open or closed curved lines curves. An example shown in Figure 9 provides a region containing several concentric circles, such a region being repeated multiple times. In variations shown in Figures 10 and 11, the sings are eccentrically plotted. The rings may take the shape of oval or helix. Other pattern elements incorporating curved markings are shown in Figures 12 and 13.

Any or all of the above pattern elements can be included to form a complete pattern for a trap embodying the invention.

Surface area covered by the lines preferably to be no less than 10% of the trap surface but no more than 50%.

The optimum colour of the substrate and the pattern may depend upon the particular insects that are to be trapped. The optimum colour combination for any particular insect can readily be determined by comparative experimentation. Patterns printed in black or dark grey against a yellow background substrate have been found to give a consistently improved whitefly catch (over 100% improvement) compared with an unpatterned trap. Patterns printed in white against a blue coloured substrate produced a significantly higher catch of thrips compared to a plain blue sticky trap. Traps with a white substrate printed with black, dark grey or dark blue patterns performed well compared with plain white sticky traps

Example 1: An experiment was carried out in a commercial greenhouse to compare a yellow sticky trap with two traps which were printed in the check shown in Figure 7. One trap had its pattern printed in white while the other had its pattern printed in black. Following the performance of the traps for a period of 30 days showed a consistent trend where traps printed in black caught double the number of insects caught on the plain trap. The number of whitefly caught on the trap printed with white was only 75% of the number of white flies caught on the plain trap.

Example 2: An Experiment was carried out in a whitefly infested tomato greenhouse. Two types of sticky yellow film embodying the invention were tested against a control (unprinted) film trap. The film embodying the invention was printed with a combination of the patterns of Figures 3 and 4 in an alternate manor. The second film was printed with a pattern combining the patterns of Figures 7 and 10. In both cases, the ink was covered approximatelu 20% of the surface area of the film leaving 80% unprinted. Patterns were printed either with a black/dark grey ink or with blue ink (which provided a final pattern colour of green). The four variants were tested in the same greenhouse over a period of 1 week. The results are summarised in the Table 1, below:

**Table 1**

| | Lines Pattern | Circles Pattern | Colour Average | Against control |
|---|---|---|---|---|
| Black Pattern | 43.3 | 16.5 | 29.9 | 374% |
| Pattern Green | 12.3 | 28.0 | 20.1 | 252% |
| Pattern Average | 27.8 | 22.3 | | |
| Against control | 347% | 278% | | |
| Control Average (No print) | | | 8 | |

The main conclusions that can be drawn from this experiment are:
1. Line patterns were marginally more effective (347%) than circles (278%) with an average of both patterns over 300% more effective than plain yellow film.
2. Black printed patterns were more effective (374%) than green printed patterns (252%). However, the average of both colours attraction is over 300% better than the unprinted film.
3. Deeper analysis reveals that black parallel straight lines are considerably more attractive than green parallel straight lines although both remain more attractive than plain film.
4. Further analysis demonstrated that the reverse is true when the film was printed in blue (giving a green colour printing). Green circles were far more attractive than green lines. Both were more significantly more attractive than the plain sticky film.

Table 2 below summarises the combinations of substrate and ink used to form the pattern that have been found to be particularly effective.

**Table 2**

| **Substrate colour** | **Yellow** | **Dark Blue** | **Light blue** | **White** |
|---|---|---|---|---|
| *Ink colour* | | | | |
| *White* | | X | | |
| *Black* | X | | X | X |
| *Dark Grey* | X | | X | X |
| *Dark blue* | X | | X | X |

## Claims

1. An insect trap comprising a substrate upon which is carried an active coating destructive to insects, in which the substrate has markings that form a visually-distinctive, contrasting visual pattern in the region of the active coating.

2. An insect trap according to claim 1 in which the active coating is transparent or semi-transparent, and at least partially cover the visual pattern, whereby the pattern is visible through the active coating.

3. An insect trap according to claim 1 or claim 2 in which, within the pattern, the markings occupy between 10% and 50% of the area covered by the pattern.

4. An insect trap according to any preceding claim in which the markings are darker in colour than the substrate.

5. An insect trap according to claim 4 in which the markings are one or more of black, dark grey, dark blue or dark green.

6. An insect trap according to claim 4 or claim 5 in which the substrate is one or more of yellow,light blue or white.

7. An insect trap according to any one of claims 1 to 3 in which the markings are lighter in colour than the substrate.

8. An insect trap according to claim 7 in which the markings are one or more of white, light blue, or light grey.

9. An insect trap according to claim 8 in which the substrate is one or more of black, dark grey or dark blue.

10. An insect trap according to any preceding claim in which the markings include a plurality of straight lines or a plurality of zigzag lines.

11. An insect trap according to any preceding claim in which the markings include a plurality of curved lines or regions.

12. An insect trap according to claim 11 in which the markings include a plurality of circles, ellipses or closed curves nested within one another.

13. An insect trap according to any preceding claim in which the active coating is a pressure-sensitive adhesive coating.

14. An insect trap according to any preceding claim in which the active coating includes a chemical insecticide.

15. An insect trap according to any preceding claim in which the active coating is capable of entomopathogenic dissemination.

16. An insect trap according to any preceding claim in which the active coating includes one or more semiochemical, such as a pheromone or an allomone.
